# EUROPÄISCHE PATENTANMELDUNG

(11) **EP 2 590 315 A1**
(43) Veröffentlichungstag der Anmeldung: **08.05.2013**
(21) Anmeldenummer: 11187577.9
(22) Anmeldetag: 02.11.2011
(51) Int. Cl.: H02N 2/02, H02N 2/00

(54) **Antriebsvorrichtung**

(71) Anmelder: Physik Instrumente (PI) GmbH & Co. KG, 76228 Karlsruhe (DE)
(72) Erfinder: Hübner, Reinhard, 76337 Waldbronn (DE)

(57) **Zusammenfassung**

Die Erfindung betrifft eine Antriebsvorrichtung, umfassend ein Gehäuse, einen Übertrager, ein Antriebselement in Form eines piezoelektrischen oder elektrostriktiven Aktuators und ein anzutreibendes Element, wobei sich der Übertrager in Friktionskontakt mit dem anzutreibenden Element befindet und über wenigstens eine erste Stirnfläche das Antriebselement kontaktiert und über wenigstens eine zweite Stirnfläche mit einem federnden Element in Kontakt steht, wobei sich sowohl das Antriebselement, als auch das federnde Element am Gehäuse in einer zur Ausdehnungsrichtung des anzutreibenden Elements im Wesentlichen parallelen Richtung abstützen, und der Übertrager wenigstens abschnittsweise von einem Vorspannungselement dergestalt umfangen ist, dass das Vorspannungselement vom Gehäuse beabstandet ist.

## Beschreibung

Die Erfindung betrifft eine Antriebsvorrichtung, bei welcher ein anzutreibendes Element mittels eines mit diesem in Friktionskontakt stehenden Übertragers dadurch angetrieben wird, dass ein den Übertrager kontaktierendes piezoelektrisches oder elektrostriktives Antriebselement sich entweder schnell ausdehnt und darauffolgend langsam zusammenzieht oder umgekehrt, um während der entsprechend langsamen Bewegung des Antriebselements den Übertrager und damit das anzutreibende Element aufgrund der zwischen Übertrager und dem anzutreibenden Element vorherrschenden Haftreibung mitzunehmen und während der entsprechend schnellen Bewegung des Antriebselements eine Relativbewegung zwischen Übertrager und dem anzutreibenden Element zu generieren, die aus der Trägheit des anzutreibenden Elements resultiert, welche dazu führt, dass zwischen Übertrager und anzutreibendem Element Gleitreibung auftritt. Demgemäß betrifft die Erfindung eine Antriebsvorrichtung, die auf dem sogenannten Stick-Slip- bzw. Haft-Gleit-Mechanismus beruht.

Aus der Druckschrift DE 10 2008 003 879 A1 ist eine ähnliche Antriebsvorrichtung bekannt. Hierbei handelt es sich um einen Linearantrieb mit einem von einer Steuereinrichtung ansteuerbaren Piezoaktor, welcher ein von einem Haltekörper gehaltenes Piezoelement sowie einen an dieses angekoppelten Übertrager aufweist. Zwischen dem Übertrager und dem zu bewegenden Objekt ist ein mechanischer Reibschluss ausgebildet, mit dessen Hilfe die Übertragung einer Antriebskraft von dem Übertrager auf das zu bewegende Objekt realisiert wird. Damit sich eine Linearbewegung des zu bewegenden Objektes ergibt, erfolgt die Ansteuerung des Piezoaktors über die Steuereinrichtung auf ganz spezielle Art und Weise. Dabei erfolgt zunächst ein relativ schneller Spannungsanstieg am Piezoaktor, so dass sich dieser schnell ausdehnt. Durch die Ausdehnung des Piezoaktors kommt es zu einer Verschiebung des Übertragers entgegen der Antriebsrichtung, wobei sich der Übertrager an einem einstückig mit dem Haltekörper ausgeführten elastischen Element abstützt. Unter Ausnutzung der Massenträgheit des zu bewegenden Objektes erfolgt durch das relativ schnelle Ausdehnen des Piezoaktors und damit einer relativ schnellen Bewegung des Übertragers ein Überwinden der Haftreibung zwischen diesem und dem zu bewegenden Objekt, so dass der Übertrager entlang des zu bewegenden Objektes gleitet, ohne dieses mitzunehmen oder zu bewegen. Im Anschluss daran erfolgt eine gegenüber dem Spannungsanstieg langsamere Reduzierung der Spannung, so dass es zu einer Kontraktion des Piezoaktors kommt, die vergleichsweise langsam ist. Dadurch kommt es zu einer Rückwärtsbewegung des mit dem Piezoaktor verbundenen Übertragers, welche so langsam ist, dass die Haftreibung zwischen Übertrager und zu bewegendem Objekt nicht überwunden wird, und der Übertrager das zu bewegende Element in Antriebsrichtung mitnimmt.

Nachteilig an dem aus der DE 10 2008 003 879 A1 bekannten Antrieb ist zum Einen, dass sich der Piezoaktor in Ausdehnungsrichtung gegen einen federnden Abschnitt des Haltekörpers abstützt. Durch die Verformung des besagten federnden Abschnitts kann es auch zu einer geringen Verformung des an den federnden Abschnitt angrenzenden Bereichs des Haltekörpers kommen, was die Kraft, mit der der Piezoaktor gegen das zu bewegende Objekt angepresst wird, beeinflussen kann. Das bedeutet, dass der bekannte Antrieb in Antriebsrichtung nur eine relativ geringe Steifigkeit aufweist. Dies kann sich insgesamt negativ auf die Positioniergenauigkeit des Antriebs auswirken.

Zum Anderen ist bei dem aus der DE 10 2008 003 879 A1 bekannten Antrieb nachteilig, dass der Übertrager gegen den Haltekörper mittels einer Führung gelagert ist. Über diese Führung muss dabei die Kraft zum Anpressen des Übertragers an das zu bewegende Objekt aufgebracht werden. Besagte Kraftaufbringung beeinflusst jedoch das Führungsverhalten, insbesondere bei hohen Anpresskräften, was sich ebenso negativ die auf Positioniergenauigkeit auswirken kann. Außerdem ergeben sich bei Veränderungen an der Anpresskraft, z.B. im Zuge von Anpassungsmaßnahmen, veränderte Führungsbedingungen. Darüber hinaus unterliegt die Führung - insbesondere bei hohen Anpresskräften - einem Verschleiß, was sich auch auf die Positioniergenauigkeit bzw. die Positionierwiederholbarkeit des Antriebs auswirkt.

Der Erfindung liegt die Aufgabe zugrunde, die zuvor erwähnten und aus dem Stand der Technik bekannten Nachteile von Stick-Slip-Antriebsvorrichtungen zu überwinden und eine Antriebsvorrichtung bereitzustellen, die bei einfachem Aufbau zuverlässig und sicher über einen langen Zeitraum mit hoher Positioniergenauigkeit betrieben werden kann.

Diese Aufgabe wird gelöst durch eine Antriebsvorrichtung mit den Merkmalen des Anspruchs 1. Vorteilhafte Weiterbildungen einer solchen Antriebsvorrichtung sind Gegenstand der Unteransprüche.

Bei der erfindungsgemäßen Antriebsvorrichtung, bei welcher der Übertrager zwischen einem vom Gehäuse separierten federnden Element und dem Antriebselement angeordnet ist, wird der Übertrager durch ein diesen zumindest abschnittsweise umfangendes Vorspannungselement gegen das anzutreibende Element gedrückt, wobei das Vorspannungselement vom Gehäuse beabstandet ist und dieses an keiner Stelle berührt. Dadurch ist es möglich, dass selbst bei sehr hohen Kräften, die über das Vorspannungselement auf den Übertrager wirken, das Vorspannungselement selber keinen Einfluss, d.h. keine Kräfte, auf das umgebende Gehäuse ausübt. Der Übertrager übernimmt dabei gleichzeitig die Rolle einer Führung des anzutreibenden Elements.

Durch die Beabstandung des Vorspannungselements vom Gehäuse ergeben sich zahlreiche Vorteile. Da nur Kräfte in Bewegungsrichtung des anzutreibenden Elements übertragen werden, fällt eine Entkopplung des Antriebs bzw. des Gehäuses gegenüber externen Führungen, in welchen der Antrieb gehaltert ist, wesentlich leichter. Auch kann dadurch eine Überbestimmung eines Systems, in welchem die erfindungsgemäße Antriebsvorrichtung eingesetzt und verwendet wird, vermieden werden. Weiterhin erfordern Veränderungen der mechanischen Vorspannung zwischen dem Übertrager und dem anzutreibenden Element, d.h. zwischen den Reibpartnern, keine Anpassung am Antriebselement oder an einem System, in dem das Antriebselement eingesetzt und verwendet wird. Außerdem ist es aufgrund der Tatsache, dass bei der erfindungsgemäßen Antriebsvorrichtung der Übertrager mit dem ihm umgebenden Vorspannungselement die Führung des anzutreibenden Elements übernimmt, sehr einfach möglich, den Hub der Antriebsvorrichtung durch entsprechende Wahl der Länge des anzutreibenden Elements anzupassen, ohne dass dafür eine Veränderung eines anderen Teils des Antriebs notwendig ist.

Die Reihen-Anordnung von federndem Element, Übertrager mit Vorspannungselement und Antriebselement, wobei sich sowohl das federnde Element, als auch das Antriebselement am Gehäuse in zur Ausdehnungsrichtung des anzutreibenden Elements im Wesentlichen parallelen Richtung abstützen, ergibt eine in Antriebsrichtung sehr steife Antriebsvorrichtung, wodurch eine hohe Positioniergenauigkeit erzielbar ist.

Es kann von Vorteil sein, dass die durch das Vorspannungselement erzeugte Anpresskraft F_{N} des Übertragers gegen das anzutreibende Element dem 4- bis 10-fachen der Blockierkraft F_{B} der Antriebsvorrichtung entspricht. Die Blockierkraft F_{B} stellt dabei die maximal von der Antriebsvorrichtung erzeugbare Schubkraft gegen eine starre Barriere dar. Bei dem zuvor angegebenen Verhältnis von Anpresskraft F_{N} zu Blockierkraft F_{B} ist ein besonders zuverlässiger und genauer Betrieb der Antriebsvorrichtung möglich.

Zudem kann es von Vorteil sein, dass das Vorspannungselement im Wesentlichen C-förmig ist. Dies erlaubt sowohl eine einfache Herstellung, als auch eine einfache Montage des Vorspannungselements bei gleichzeitig damit erzielbarer hoher Anpresskraft F_{N}.

Weiterhin kann es von Vorteil sein, dass das Antriebselement ringförmig ist und das anzutreibende Element vollumfänglich umgibt. Die Verwendung eines ringförmigen Antriebselements vereinfacht das Ausrichten des Antriebselements sowohl zum Gehäuse, als auch zum Übertrager und zum federnden Element. Der Kontakt zwischen ringförmigem Antriebselement und Übertrager ist sehr großflächig und damit robust gegen ein Verkippen. Darüber hinaus erträgt ein ringförmiges Antriebselement hohe Momente um seine Hochachse. Dadurch kann die Antriebsvorrichtung bzw. deren Gehäuse ohne Zerstörungsgefahr mit einer Verschraubung geschlossen werden.

Es kann ebenfalls von Vorteil sein, dass das Antriebselement stoffschlüssig mit dem Gehäuse verbunden ist. Dadurch ist auf einfache Weise eine verlässliche Verbindung zwischen Gehäuse und Antriebselement realisierbar.

Außerdem kann es von Vorteil sein, dass der Übertrager wenigstens zwei im Wesentlichen C-förmige Abschnitte umfasst. Dadurch ist es möglich, die Kraft des Vorspannungselements optimal in den Übertrager einzuleiten und eine definierte Anpresskraft zu erhalten.

Es kann günstig sein, dass das federnde Element zumindest eine Tellerfeder oder zumindest eine Spannscheibe ist. Der ringförmige Aufbau einer Tellerfeder oder einer Spannscheibe ermöglicht einen sehr platzsparenden Einsatz. Es handelt sich dabei um äußerst preiswerte Maschinenelemente, welche durch ihre enorme Federhärte den Betrieb der Antriebsvorrichtung bei Frequenzen oberhalb des für Menschen hörbaren Bereiches erlauben. Zudem kann durch Verwendung mehrerer Tellerfedern und/oder Spannscheiben auf einfache Weise eine gezielte Anpassung der Federkraft vorgenommen werden. Durch Verwendung von Tellerfedern oder Spannscheiben kann eine in Antriebsrichtung äußerst steife Antriebsvorrichtung realisiert werden.

Ebenso kann es günstig sein, dass die Tellerfeder oder die Spannscheibe im montierten Zustand eine Federsteifigkeit k aufweist, die dem 100- bis 400-fachen von F_{B}/mm entspricht. Dadurch ist ein besonders effektiver und genauer Antrieb des anzutreibenden Elements möglich.

Darüber hinaus kann es günstig sein, dass der Übertrager Bronze aufweist und vorzugsweise aus Bronze besteht, und/oder das anzutreibende Element Stahl umfasst und vorzugsweise aus gehärtetem Stahl besteht. Die Werkstoffkombination Bronze/gehärteter Stahl ist hierbei besonders vorteilhaft, da hierdurch optimierte Haft- bzw. Gleitreibungsverhältnisse einstellbar sind.

Weiterhin kann es günstig sein, dass der Übertrager gegen das Antriebselement mittels eines Zentriermittels, vorzugsweise mittels einer Zentrierhülse, ausgerichtet ist. Dadurch ist ein besonders effektiver Betrieb der Antriebsvorrichtung möglich.

Kombinationen der zuvor angeführten vorteilhaften Weiterbildungen oder Kombinationen von Teilen davon sind ebenso denkbar.

Kurze Beschreibung der Zeichnungen

Es zeigen in schematischer und nicht maßstabsgetreuer Weise:

Fig. 1: Erfindungsgemäße Antriebsvorrichtung in Längsschnittdarstellung

Fig. 2: Erfindungsgemäße Antriebsvorrichtung gemäß Fig. 1 in Explosionsdarstellung

Fig. 3: Weitere Ausführungsform der erfindungsgemäßen Antriebsvorrichtung in Längsschnittdarstellung

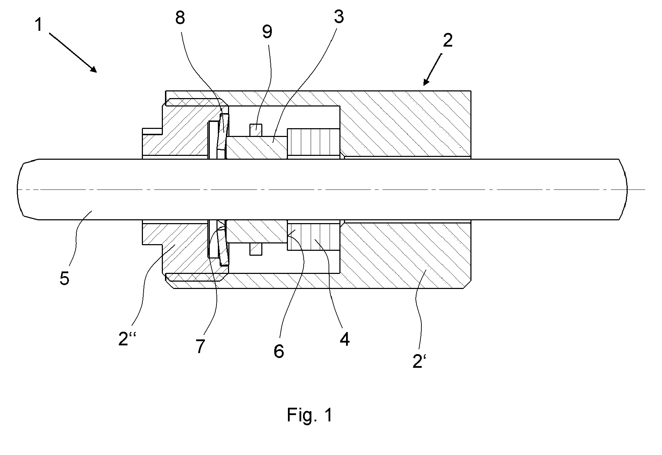

Fig. 1 zeigt eine erfindungsgemäße Antriebsvorrichtung 1 in Längsschnittdarstellung. Ein Übertrager 3 in Form zweier kreissegment- oder C-förmiger Abschnitte aus Bronze umgibt bzw. umfängt teilweise ein anzutreibendes Element 5 aus Stahl in Form eines Rundstabs und liegt an diesem an. Das anzutreibende Element 5 und der Übertrager 3 bilden eine Friktions- oder Reibpaarung. Die Buchse oder Hülse des Übertragers 3 kann dabei ebenso aus Keramik bestehen. Weiterhin ist denkbar, dass das anzutreibende Element 5 aus einem anderen Material als Stahl, beispielsweise aus Kunststoff, besteht und keine runde Außengeometrie, sondern einer eckige Außengeometrie, z.B. in Form eines viereckigen oder sechseckigen Stabs, besitzt.

Zum Anpressen der beiden Abschnitte des Übertragers 3 an das anzutreibende Element 5 sind diese von einem im Wesentlichen C-förmigen Vorspannungselement 9 aus Federstahl umgeben. Das Vorspannungselement 9 ist dabei von dem umgebenden Gehäuse 2 beabstandet und berührt dieses nicht.

An ersten Stirnflächen 6 ist der Übertrager 3 in Kontakt mit einem federnden Element 8 in Form einer Tellerfeder. An zweiten Stirnflächen 7, die den ersten Stirnflächen 6 gegenüber liegen, kontaktiert der Übertrager 7 ein Antriebselement 4 in Gestalt eines ringförmigen, piezoelektrischen Aktuators. Sowohl die Tellerfeder 8, als auch der piezoelektrische Aktuator stützen sich am zweiteiligen Gehäuse 2 in einer zur Ausdehnungsrichtung des anzutreibenden Elements 5 im Wesentlichen parallelen Richtung ab, wobei der piezoelektrische Aktuator 4 durch eine stoffschlüssige Klebeverbindung mit dem Gehäuseteil 2' verbunden ist, während die Tellerfeder 8 am Gehäuseteil 2" anliegt. Die Tellerfeder 8 und der piezoelektrische Aktuator 4 umgeben das anzutreibende Element 5 vollumfänglich, wobei sie dieses nicht berühren.

Das Gehäuseteil 2" ist in das Gehäuseteil 2' eingeschraubt, wobei über die Einschraubtiefe die Vorspannung der Tellerfeder 8 eingestellt werden kann.

Es kann sinnvoll sein, dass im Gehäuseteil 2' und/oder im Gehäuseteil 2" Buchsen eingesetzt sind, welche die Führung des anzutreibenden Elements 5 unterstützen, indem diese als Anschlag- oder Wegbegrenzungselemente für das anzutreibende Element 5 fungieren.

Das Antriebselement 4 besteht aus einem piezokeramischen Material und ist kompakt aufgebaut. Dabei ist die Piezokeramik lediglich an den Außenflächen elektrisch kontaktiert, und zwischen den entsprechenden Außenelektroden befindet sich die Piezokeramik, die in geeigneter Weise polarisiert ist. Alternativ dazu ist es ebenso möglich, dass das piezokeramische Material des Antriebselements 4 eine Multilayer-Bauweise besitzt, die sich dadurch auszeichnet, dass auch innerhalb des piezokeramischen Materials zahlreiche, sogenannte Innenelektroden, angeordnet sind, wobei die Innenelektroden normalerweise über Terminierungs- oder Kontaktelektroden miteinander verbunden sind. Der wesentliche Vorteil der Multilayer-Bauweise besteht darin, dass die Ansteuerspannungen des Aktuators für eine definierte Auslenkung bzw. Ausdehnung wesentlich niedriger sein können als bei kompakter Bauweise. Der Vorteil bei kompakter Bauweise liegt hingegen in der deutlich einfacheren Herstellung entsprechender Aktuatoren.

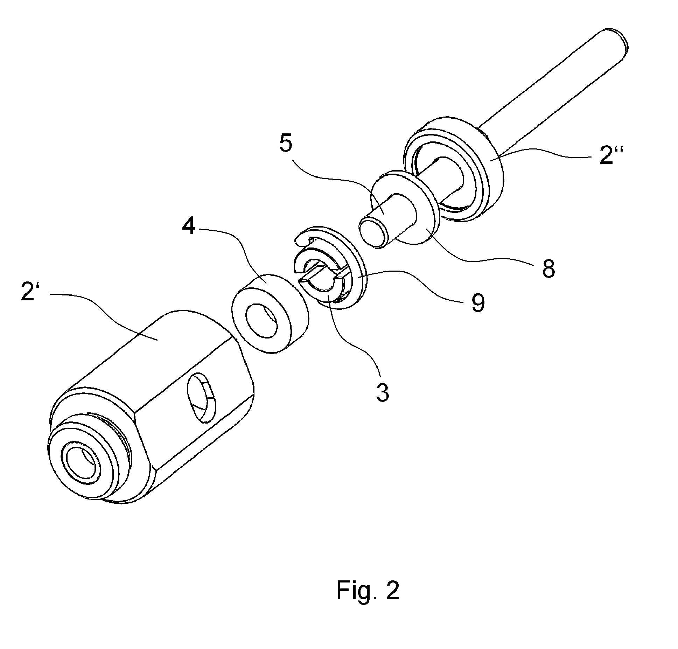

Fig. 2 zeigt die erfindungsgemäße Antriebsvorrichtung gemäß Fig. 1 in perspektivischer Explosionsdarstellung. Gleiche Teile sind mit identischen Bezugszeichen versehen. Da es sich hierbei nur um eine andere Darstellungsweise der Antriebsvorrichtung gemäß Fig. 1 handelt, wird auf eine nähere Beschreibung verzichtet und auf die Ausführungen zu Fig. 1 verwiesen.

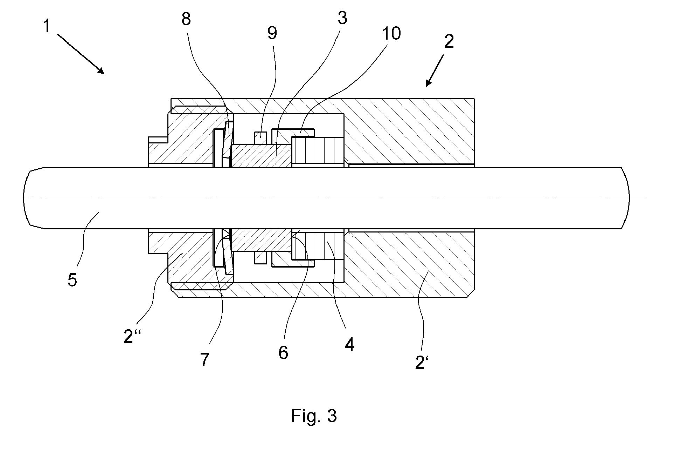

Fig. 3 zeigt eine weitere Ausführungsform der erfindungsgemäßen Antriebsvorrichtung, die sich gegenüber der in Fig. 1 dargestellten Ausführungsform einzig dahingehend unterscheidet, dass aus Gründen der Ausrichtung des Übertragers 3 gegen das Antriebselement 4 ein Zentriermittel in Form einer Zentrierhülse 10 vorgesehen ist. Das Zentriermittel verhindert dabei im Wesentlichen eine radiale Lageänderung des Übertragers 3 gegen das Antriebselement 4, so dass eine optimierte Führung des anzutreibenden Elements 5 durch den Übertrager 3 ermöglicht ist.

Funktionsweise der erfindungsgemäßen Antriebsvorrichtung

Bei der erfindungsgemäßen Antriebsvorrichtung ist der Übertrager 3 mittels des Vorspannungselements 9 an das anzutreibende Element 5 angepresst, und befindet sich mit diesem in Friktionskontakt. Weiterhin ist der Übertrager 3 an den ersten Stirnflächen 6 durch das vorgespannte federnde Element 8 unterstützt, während er an den gegenüberliegenden zweiten Stirnflächen 8 das Antriebselement 4 kontaktiert. Durch diese Anordnung ist der Übertrager 3 fest eingespannt und in seiner Bewegungsmöglichkeit so weit eingeschränkt, dass Bewegungen im Wesentlichen nur parallel zur Ausdehnungsrichtung des anzutreibenden Elements 5 = Antriebsrichtung möglich sind. Dadurch fungiert der Übertrager 3 gleichzeitig als Führung für das anzutreibende Element 5; eine weitergehende Führungseinrichtung ist prinzipiell nicht notwendig. Die beschriebene Anordnung von federndem Element, Übertrager mit dem diesen umgebenden Vorspannungselement und dem Antriebselement ergibt eine sehr steife und kompakte Antriebsvorrichtung,

Der zugrunde liegende Antriebsmechanismus der erfindungsgemäßen Antriebsvorrichtung untergliedert sich im Wesentlichen in die zwei im Folgenden charakterisierten Phasen:

In der Ausdehnungsphase wird das Antriebselement 4 durch eine geeignete elektrische Einrichtung so angesteuert, dass es zu einem bestimmten zeitlichen Verlauf seiner Ausdehnung kommt.

Die Ausdehnung des Antriebselements 4 in der Ausdehnungsphase überträgt sich auf den Übertrager 3, der sich somit in einer zum anzutreibenden Element parallelen Richtung bewegt. Dabei kommt es zu einer Stauchung des in mit dem Übertrager in Kontakt stehenden federnden Elements. Diese Stauchung bewirkt, dass während der sich der Ausdehnungsphase anschließenden Kontraktionsphase der Übertrager 3 der entsprechenden Rückwärts- bzw. Kontraktionsbewegung des Antriebselements 4 folgt und mit diesem auch während der Kontraktionsphase in dauerhaftem Kontakt bleibt.

Zwei unterschiedliche Abfolgen von Ausdehnungs- und Kontraktionsphase sind möglich: entweder erfolgt eine schnelle Ausdehnungsphase, der sich eine langsame Kontraktionsphase anschließt, oder aber einer langsamen Ausdehnungsphase folgt eine schnelle Kontraktionsphase.

Bei schneller Ausdehnungsphase des Antriebselements 4 macht auch der Übertrager 3 eine schnelle Bewegung, welcher das anzutreibende Element 5 aufgrund seiner Trägheit nicht folgen kann. Dadurch kommt es zu einem relativen Gleiten des Übertragers 3 gegenüber dem anzutreibenden Element 5, und folglich ergibt sich im Wesentlichen keine Bewegung des anzutreibenden Elements 5.

In der sich anschließenden Kontraktionsphase, die wesentlich langsamer ist als die Ausdehnungsphase, herrscht Haftreibung zwischen dem Übertrager 3 und dem anzutreibenden Element 5, so dass das anzutreibende Element vom Übertrager 3 mitgenommen wird. Somit ergibt sich eine Bewegung des anzutreibenden Elements 5 in die gewünschte Antriebsrichtung.

Da während einer solchen Kontraktionsphase des Antriebselements 4 nur eine relativ geringe Bewegung des anzutreibenden Elements 5 folgt, wird die zuvor beschriebene Abfolge aus Ausdehnungs- und Kontraktionsphase in der Regel vielfach wiederholt, um einen größeren Stellweg des anzutreibenden Elements 5 zu realisieren.

Bei umgekehrter Abfolge, wobei einer langsamen Ausdehnungsphase eine schnelle Kontraktionsphase folgt, ist eine Bewegung des anzutreibenden Elements 5 in entgegengesetzter Richtung realisierbar.

## Patentansprüche

1. Antriebsvorrichtung (1), umfassend ein Gehäuse (2), einen Übertrager (3), ein Antriebselement (4) in Form eines piezoelektrischen oder elektrostriktiven Aktuators und ein anzutreibendes Element (5), wobei sich der Übertrager (3) in Friktionskontakt mit dem anzutreibenden Element (5) befindet und über wenigstens eine erste Stirnfläche (6) das Antriebselement (4) kontaktiert und über wenigstens eine zweite Stirnfläche (7) mit einem federnden Element (8) in Kontakt steht, wobei sich sowohl das Antriebselement (4), als auch das federnde Element (8) am Gehäuse (2) in einer zur Ausdehnungsrichtung des anzutreibenden Elements im Wesentlichen parallelen Richtung abstützen, und der Übertrager (3) wenigstens abschnittsweise von einem Vorspannungselement (9) dergestalt umfangen ist, dass das Vorspannungselement (9) vom Gehäuse (2) beabstandet ist.

2. Antriebsvorrichtung nach Anspruch 1, **dadurch gekennzeichnet, dass** die durch das Vorspannungselement (9) erzeugte Anpresskraft F_{N} des Übertragers (3) gegen das anzutreibende Element (5) dem 4- bis 10-fachen der Blockierkraft F _{B} der Antriebsvorrichtung entspricht.

3. Antriebsvorrichtung nach Anspruch 1 oder 2, **dadurch gekennzeichnet, dass** das Vorspannungselement (9) im Wesentlichen C-förmig ist.

4. Antriebsvorrichtung nach einem der vorangegangenen Ansprüche, **dadurch gekennzeichnet, dass** das Antriebselement (4) ringförmig ist und das anzutreibende Element (5) vollumfänglich umgibt.

5. Antriebsvorrichtung nach einem der vorangegangenen Ansprüche, **dadurch gekennzeichnet, dass** das Antriebselement (4) stoffschlüssig mit dem Gehäuse (2) verbunden ist.

6. Antriebsvorrichtung nach einem der vorangegangenen Ansprüche, **dadurch gekennzeichnet, dass** der Übertrager (3) wenigstens zwei im Wesentlichen C-förmige Abschnitte umfasst.

7. Antriebsvorrichtung nach einem der vorangegangenen Ansprüche, **dadurch gekennzeichnet, dass** das federnde Element (8) zumindest eine Tellerfeder oder zumindest eine Spannscheibe ist.

8. Antriebsvorrichtung nach Anspruch 7, **dadurch gekennzeichnet, dass** die Tellerfeder oder die Spannscheibe im montierten Zustand eine Federsteifigkeit k aufweist, die dem 100- bis 400-fachen von F_{B}/mm entspricht.

9. Antriebsvorrichtung nach einem der vorangegangenen Ansprüche, **dadurch gekennzeichnet, dass** der Übertrager (3) Bronze aufweist und vorzugsweise aus Bronze besteht, und/oder das anzutreibende Element (5) Stahl umfasst und vorzugsweise aus gehärtetem Stahl besteht.

10. Antriebsvorrichtung nach einem der vorangegangenen Ansprüche, **dadurch gekennzeichnet, dass** der Übertrager (3) gegen das Antriebselement (4) mittels eines Zentriermittels (10), vorzugsweise mittels einer Zentrierhülse, ausgerichtet ist.
